# EUROPEAN PATENT APPLICATION

(11) **EP 4 557 655 A1**
(43) Date of publication of application: **21.05.2025**
(21) Application number: 23839042.1
(22) Date of filing: 14.07.2023
(51) Int. Cl.: H04L 5/00

(54) **POSITIONING REFERENCE SIGNAL SENDING METHOD AND APPARATUS, POSITIONING REFERENCE SIGNAL RECEIVING METHOD AND APPARATUS, AND TERMINAL**

(30) Priority: 15.07.2022 CN 202210833771
(71) Applicant: Spreadtrum Semiconductor (Nanjing) Co., Ltd., Nanjing, Jiangsu 211899 (CN)
(72) Inventor: LEI, Zhenzhu, Shanghai 201203 (CN)
(74) Representative: Mewburn Ellis LLP
(86) International application number: PCT/CN2023/107390
(87) International publication number: WO 2024/012553

(57) **Abstract**

A method and an apparatus for positioning reference signal transmission and reception, and a terminal are provided. The method for transmission includes the following. A positioning reference signal is transmitted in at least some of symbols between a first symbol and a second symbol in a target slot, where the first symbol is used for automatic gain control (AGC), and the second symbol is used for transmission/reception (Tx/Rx) switching. With the solutions provided in the disclosure, transmission of the positioning reference signal on a sidelink can be supported.

## Description

### CROSS-REFERENCE TO RELATED APPLICATION(S)

This application claims priority to Chinese patent application No. 202210833771.3, filed to the Chinese Patent Office on July 15, 2022 and entitled "METHOD AND APPARATUS FOR POSITIONING REFERENCE SIGNAL TRANSMISSION AND RECEPTION, AND TERMINAL", which is incorporated herein by reference in its entirety.

### TECHNICAL FIELD

The disclosure relates to the field of communication technology, and more particularly, to a method and an apparatus for positioning reference signal transmission and reception, and a terminal.

### BACKGROUND

With evolution of new communication technologies, such as the 5^{th}-generation (5G) mobile communication technology, the 3^{rd}-generation partnership project (3GPP) will carry out studies on sidelink-based positioning. In an existing sidelink transmission protocol, a sidelink does not yet support transmission of a reference signal used for positioning (also referred to as a positioning reference signal), such as a positioning reference signal (PRS) or a sounding reference signal (SRS). With regard to transmission of a positioning reference signal on a sidelink, there is currently no related scheme, which puts forward new requirements on an existing mechanism for reference signal transmission on a sidelink.

### SUMMARY

Embodiments of the disclosure provide a method for positioning reference signal transmission, which can support transmission of a positioning reference signal on a sidelink.

In a first aspect, in order to solve the above problem, a method for positioning reference signal transmission is provided in embodiments of the disclosure. The method includes the following. A positioning reference signal is transmitted in at least some of symbols between a first symbol and a second symbol in a target slot, where the first symbol is used for automatic gain control (AGC), and the second symbol is used for transmission/reception (Tx/Rx) switching.

Optionally, if the target slot is used for transmission of the positioning reference signal, the number of first symbols is multiple, and/or the number of second symbols is multiple.

Optionally, the number of first symbols and the number of second symbols are pre-configured.

Optionally, for different carriers, the number of first symbols and/or the number of second symbols is different. Alternatively, for different bandwidth parts (BWP), the number of first symbols and/or the number of second symbols is different. Alternatively, for different resource pools, the number of first symbols and/or the number of second symbols is different.

Optionally, if the target slot is not used for transmission of the positioning reference signal, each of the number of first symbols and the number of second symbols is one.

Optionally, if the target slot is not used for transmission of the positioning reference signal, the number of first symbols is multiple, and/or the number of second symbols is multiple.

Optionally, the target slot is further configured with a third symbol, where the third symbol is used for sidelink control information (SCI) transmission. At least one symbol that is subsequent to the third symbol is the first symbol, and at least some of symbols between the last first symbol and the second symbol are used for transmission of the positioning reference signal and/or transmission of sidelink data.

Optionally, a symbol that precedes the third symbol is one first symbol.

Optionally, the target slot is further configured with a third symbol, where the third symbol is used for SCI transmission. If the SCI indicates that the target slot is used for transmission of the positioning reference signal, multiple consecutive symbols that are subsequent to the third symbol are all first symbols, and at least some of symbols that are subsequent to the multiple first symbols are used for transmission of the positioning reference signal.

Optionally, if the SCI indicates that the target slot is not used for transmission of the positioning reference signal, a plurality of consecutive symbols that are subsequent to the third symbol are used for transmission of sidelink data.

In a second aspect, a method for positioning reference signal reception is provided in embodiments of the disclosure. The method includes the following. A positioning reference signal is received in at least some of symbols between a first symbol and a second symbol in a target slot, where the first symbol is used for AGC, and the second symbol is used for Tx/Rx switching.

Optionally, if the target slot is used for reception of the positioning reference signal, the number of first symbols is multiple, and/or the number of second symbols is multiple.

Optionally, the number of first symbols and the number of second symbols are pre-configured.

Optionally, for different carriers, the number of first symbols and/or the number of second symbols is different. Alternatively, for different BWPs, the number of first symbols and/or the number of second symbols is different. Alternatively, for different resource pools, the number of first symbols and/or the number of second symbols is different.

Optionally, if the target slot is not used for reception of the positioning reference signal, each of the number of first symbols and the number of second symbols is one.

Optionally, if the target slot is not used for reception of the positioning reference signal, the number of first symbols is multiple, and/or the number of second symbols is multiple.

Optionally, the target slot is further configured with a third symbol, where the third symbol is used for SCI reception. At least one symbol that is subsequent to the third symbol is the first symbol, and at least some of symbols between the last first symbol and the second symbol are used for reception of the positioning reference signal and/or reception of sidelink data.

Optionally, a symbol that precedes the third symbol is one first symbol.

Optionally, the target slot is further configured with a third symbol, where the third symbol is used for SCI reception. If the SCI indicates that the target slot is used for reception of the positioning reference signal, multiple consecutive symbols that are subsequent to the third symbol are all first symbols, and at least some of symbols that are subsequent to the multiple first symbols are used for reception of the positioning reference signal.

Optionally, if the SCI indicates that the target slot is not used for reception of the positioning reference signal, multiple consecutive symbols that are subsequent to the third symbol are used for reception of sidelink data.

In a third aspect, an apparatus for positioning reference signal transmission is provided in embodiments of the disclosure. The apparatus includes a transmitting module. The transmitting module is configured to transmit a positioning reference signal in at least some of symbols between a first symbol and a second symbol in a target slot, wherein the first symbol is used for AGC, and the second symbol is used for Tx/Rx switching.

In a fourth aspect, an apparatus for positioning reference signal reception is provided in embodiments of the disclosure. The apparatus includes a receiving module. The receiving module is configured to receive a positioning reference signal in at least some of symbols between a first symbol and a second symbol in a target slot, where the first symbol is used for AGC, and the second symbol is used for Tx/Rx switching.

In a fifth aspect, a computer-readable storage medium is further provided in embodiments of the disclosure. The computer-readable storage medium is configured to store computer programs which, when executed by a processor, are operable to perform the method provided in the first aspect or the method for provided in the second aspect.

In a sixth aspect, a memory and a processor are further provided in embodiments of the disclosure. The memory is configured to stores computer programs executable by the processor. The processor is configured to execute the computer programs to perform steps of the method provided in the first aspect or the method provided in the second aspect.

Compared with the related art, technical solutions of embodiments of the disclosure have the following advantages.

In the solutions of embodiments of the disclosure, the target slot is configured with the first symbol and the second symbol, where the first symbol is used for AGC, and the second symbol is used for Tx/Rx switching. The positioning reference signal is transmitted in at least some of symbols between the first symbol and the second symbol. In the solutions of embodiments of the disclosure, the positioning reference signal is transmitted after the first symbol, and as such, a terminal can perform AGC in the first symbol so as to satisfy power requirements of the positioning reference signal, and perform Tx/Rx switching after the positioning reference signal is transmitted. By adopting such a scheme, it is possible to realize transmission of the positioning reference signal on a sidelink.

Further, in the solution of embodiments of the disclosure, the number of first symbols and/or the number of second symbols is multiple. Thus, if the target slot is used for transmission of the positioning reference signal, the target slot can include multiple symbols that are used for AGC and/or Tx/Rx switching. Compared with the existing slot structure, by adopting the solutions of embodiments of the disclosure, it is possible to provide more time for the terminal to perform AGC and/or Tx/Rx switching, which satisfies transmission requirements of a positioning reference signal having a relatively large bandwidth and thus is beneficial to ensuring positioning accuracy.

Further, if the target slot is not used for transmission of the positioning reference signal, the number of first symbols and/or the number of second symbols is also multiple. By adopting such a scheme, it is possible to ensure that the target slot determined can satisfy transmission requirements of the positioning reference signal if a time-domain resource set for data transmission at least partially overlaps with a time-domain resource set for transmission of the positioning reference signal.

Further, whether the multiple consecutive symbols subsequent to the third symbol are first symbols can be determined based on the indication of SCI. If the SCI indicates that the target slot is used for transmission of the positioning reference signal, the multiple consecutive symbols subsequent to the third symbol are all first symbols. By adopting such a scheme, the slot structure can be determined flexibly according to the SCI.

### BRIEF DESCRIPTION OF THE DRAWINGS

FIG. 1 is a schematic flowchart of a method for positioning reference signal transmission according to embodiments of the disclosure.
FIG. 2 is a schematic diagram illustrating a sidelink slot structure in the related art.
FIG. 3 is a schematic diagram illustrating a sidelink slot structure according to embodiments of the disclosure.
FIG. 4 is a schematic diagram illustrating another sidelink slot structure according to embodiments of the disclosure.
FIG. 5 is a schematic flowchart of a method for positioning reference signal reception according to embodiments of the disclosure.
FIG. 6 is a schematic structural diagram of an apparatus for positioning reference signal transmission according to embodiments of the disclosure.
FIG. 7 is a schematic structural diagram of an apparatus for positioning reference signal reception according to embodiments of the disclosure.

### DETAILED DESCRIPTION

As described in the background, there is currently no solution related to transmission of a positioning reference signal on a sidelink, which puts forward new requirements on an existing mechanism for reference signal transmission on a sidelink.

In order to solve the above problem, embodiments of the disclosure provide a method for positioning reference signal transmission. In solutions of embodiments of the disclosure, a target slot is configured with a first symbol and a second symbol, where the first symbol is used for automatic gain control (AGC), and the second symbol is used for transmission/reception (Tx/Rx) switching. A positioning reference signal is transmitted in at least some of symbols between the first symbol and the second symbol. In the solutions of embodiments of the disclosure, the positioning reference signal is transmitted after the first symbol, and as such, a terminal can perform AGC in the first symbol so as to satisfy power requirements of the positioning reference signal, and perform Tx/Rx switching after the positioning reference signal is transmitted. By adopting such a scheme, it is possible to realize transmission of the positioning reference signal on a sidelink.

To make the objectives, features, and advantages of the disclosure clearer and more comprehensible, embodiments of the disclosure will be described in detail below with reference to the accompanying drawings.

For ease of illustration, in embodiments of the disclosure, a symbol used for AGC is denoted as a first symbol (or referred to as an AGC symbol), and a symbol used for Tx/Rx switching is denoted as a second symbol (or referred to as a gap symbol).

For ease of illustration, in embodiments of the disclosure, a terminal for transmitting a positioning reference signal is denoted as a Tx terminal (or referred to as a Tx user equipment (UE)), and a terminal for receiving a positioning reference signal is denoted as a Rx terminal (or referred to as a Rx UE).

The positioning reference signal described in the disclosure refers to a reference signal used for positioning. The reference signal can be used for positioning a Tx terminal, or can be used for positioning other terminals except the Tx terminal, which is not limited in embodiments.

The positioning reference signal can be a reference signal that is already defined, such as a positioning reference signal (PRS) or a sounding reference signal (SRS), or can be a newly defined reference signal, which is not limited in embodiments.

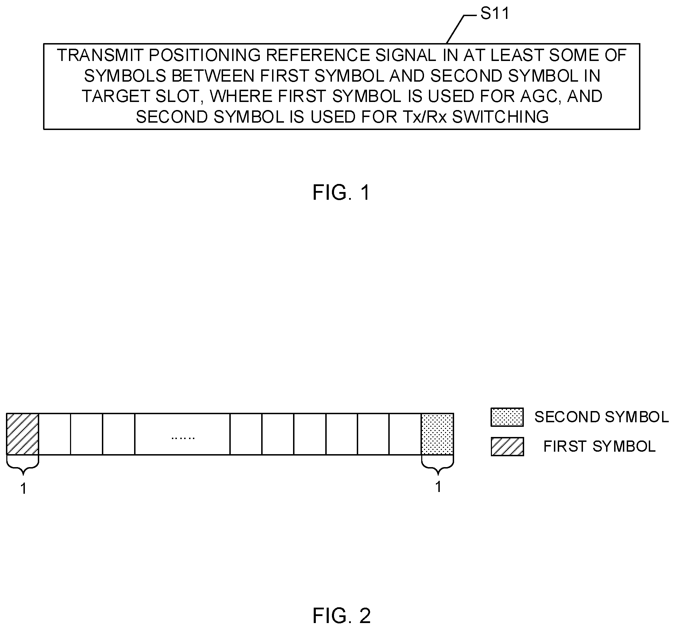

Referring to FIG. 1, FIG. 1 is a schematic flowchart of a method for positioning reference signal transmission according to embodiments of the disclosure. The method illustrated in FIG. 1 can be performed by a Tx terminal. As illustrated in FIG. 1, the method for transmitting positioning reference signal can include step S11.

Step S11, a positioning reference signal is transmitted in at least some of symbols between a first symbol and a second symbol in a target slot, where the first symbol is used for AGC, and the second symbol is used for Tx/Rx switching.

In the implementation of step S11, the target slot can be firstly determined. During implementation, the Tx terminal can determine a transmission resource through resource sensing. In a sidelink positioning scenario, in response to a positioning requirement, the Tx terminal can trigger resource sensing to determine a transmission resource for the positioning reference signal. More specifically, the Tx terminal can determine an available resource(s) according to a sensing result of resource sensing, and then select the transmission resource for the positioning reference signal from the available resource. "Response to the positioning requirement" can mean that a positioning request transmitted by a Rx terminal is received by the Tx terminal, but is not limited thereto.

Further, the transmission resource includes a time-domain resource and a frequency-domain resource. The time-domain resource can include one or more target slots. The frequency-domain resource can be one or more of: a carrier, a bandwidth part (BWP), or a resource pool. In embodiments of the disclosure, no limitation is imposed on the frequency-domain resource and the method for determining the frequency-domain resource.

In the solutions of embodiments of the disclosure, if the target slot is used for transmission of the positioning reference signal, there can be multiple first symbols in each target slot, and/or there can be multiple second symbols in each target slot.

Referring to FIG. 2, FIG. 2 is a schematic diagram illustrating a sidelink slot structure in the related art. As illustrated in FIG. 2, the sidelink slot structure in the related art includes a single first symbol used for AGC and a single second symbol used for Tx/Rx switching. That is, each of a duration for AGC and a duration for Tx/Rx switching of the terminal device is a single symbol. This is because the bandwidth of a sidelink is relatively small at present, the terminal can complete AGC within the time of a single symbol, and can complete Tx/Rx switching within the time of a single symbol.

However, in a positioning scenario, a larger transmission bandwidth of the positioning reference signal leads to higher positioning accuracy. In order to ensure positioning accuracy, a sidelink in the future is required to provide a larger transmission bandwidth for the positioning reference signal. When transmitting a positioning reference signal having a relatively large bandwidth, the terminal may be unable to complete AGC within the time of a single symbol, or may be unable to complete Tx/Rx switching within the time of a single symbol. Therefore, a slot structure for a reference signal on an existing sidelink may not satisfy transmission requirements of the positioning reference signal.

In the solutions of embodiments of the disclosure, for transmission of the positioning reference signal, the target slot can include multiple symbols that are used for AGC and/or Tx/Rx switching. Compared with the existing slot structure, by adopting the solutions of embodiments of the disclosure, it is possible to provide more time for the terminal to perform AGC and/or Tx/Rx switching, which satisfies transmission requirements of a positioning reference signal having a relatively large bandwidth and thus is beneficial to ensuring positioning accuracy.

During implementation, the number of first symbols and the number of second symbols can be pre-configured. It should be noted that, in the same slot, the number of first symbols can be the same as or different from the number of second symbols, which is not limited in embodiments.

Further, in the solutions of embodiments of the disclosure, the number of first symbols and the number of second symbols can be pre-configured with regard to different frequency-domain resources. More specifically, the number of first symbols and/or the number of second symbols can be pre-configured in any one of the following manners.

Manner 1: the number of first symbols and/or the number of second symbols are pre-configured at a carrier level. For different carriers, the number of first symbols and/or the number of second symbols can be different.

Manner 2: the number of first symbols and/or the number of second symbols are pre-configured at a BWP level. For different BWPs, the number of first symbols and/or the number of second symbols can be different.

Manner 3: the number of first symbols and/or the number of second symbols are pre-configured at a resource-pool level. For different resource pools, the number of first symbols and/or the number of second symbols can be different.

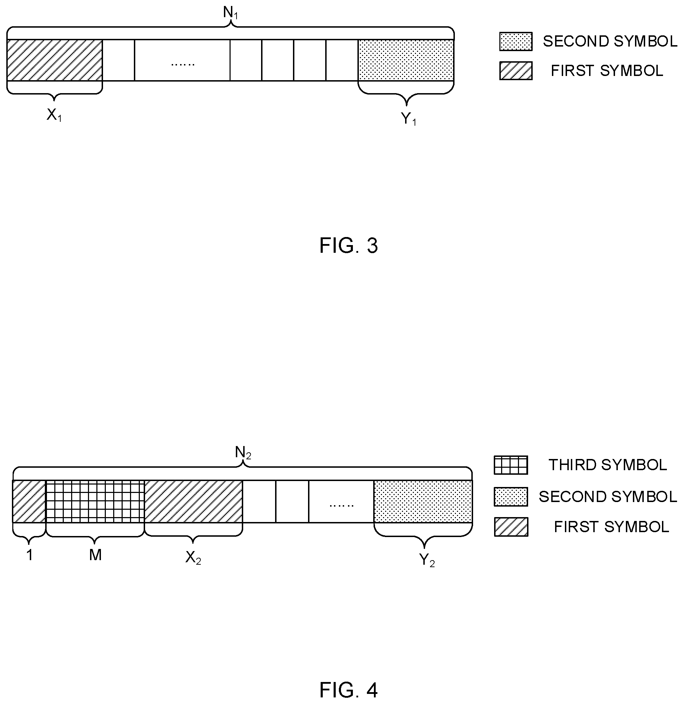

Referring to FIG. 3, FIG. 3 is a schematic diagram illustrating a sidelink slot structure according to embodiments of the disclosure. As illustrated in FIG. 3, the slot can include *N*₁ symbols, the number of first symbols can be *X*₁*,* and the number of second symbols can be *Y*₁, where *N*₁, *X*₁*,* and *Y*₁ each can be a positive integer greater than 1, and *N*₁>*X*₁*+Y*₁*.* The value of *N*₁, the value of *X*₁, and the value of *Y*₁ each can be pre-configured. The value of *X*₁ can be equal or unequal to the value of *Y*₁.

More specifically, in a single slot, the 1^{st} symbol to the *X*₁^{th} symbol are first symbols, and the (*N*₁- *Y*₁)^{th} symbol to the *N*₁^{th} symbol are second symbols. That is, in a single slot, the first *X*₁ symbols are used for automatic gain adjustment, and the last *Y*₁ symbols are used for Tx/Rx switching. In other words, the terminal can perform AGC within the time indicated by at least some of symbols between the 1^{st} symbol to the *X*₁^{th} symbol, and perform Tx/Rx switching within the time indicated by at least some of symbols between the (*N*₁- *Y*₁)^{th} symbol to the *N*₁^{th} symbol.

For example, AGC can be performed starting from the 1^{st} symbol, or can be performed starting from any first symbol that is subsequent to the 1^{st} symbol. Similarly, Tx/Rx switching can be performed starting from the (*N*₁- *Y*₁)^{th} symbol, or can be performed starting from any one second symbol that is subsequent the (*N*₁- *Y*₁)^{th} symbol.

Further, in the slot structure illustrated in FIG. 3, the (*X*₁+1)^{th} symbol to the (*N*₁-*Y*₁-1)^{th} symbol can be denoted as a first other symbol(s), and the first other symbol can be used for one or more of: physical sidelink control channel (PSCCH) transmission, physical sidelink shared channel (PSSCH) transmission, or transmission of the positioning reference signal. The PSCCH can be used for carrying sidelink control information (SCI), and the PSSCH can be used for carrying data transmitted on a sidelink. In other words, the first other symbol can be used for one or more of: SCI transmission, data transmission, or transmission of the positioning reference signal.

It should be noted that, the data (or data on a sidelink) described in embodiments of the disclosure refers to data carried on a PSSCH.

When transmitting the positioning reference signal, SCI transmission (i. e. PSSCH transmission) can be performed firstly, and then the positioning reference signal is transmitted.

It should be noted that, data transmission (i. e. PSSCH transmission) can be done when performing SCI transmission, that is, the SCI and the data can occupy the same symbol for transmission. Specifically, PSCCH transmission and PSSCH transmission can be performed through frequency division multiplexing.

It should also be noted that, data transmission can be done when performing transmission of the positioning reference signal. That is, on a sidelink, the data and the positioning reference signal can occupy the same symbol for transmission, and data and the positioning reference signal occupying the same symbol for transmission occupy different frequency-domain resources.

In a first embodiment of the disclosure, if the target slot is used for transmission of the positioning reference signal, the target slot has the structure illustrated in FIG. 3. If the target slot is not used for transmission of the positioning reference signal, the target slot can have the structure illustrated in FIG. 2.

Specifically, a slot structure in a resource pool for the positioning reference signal is configured as the slot structure illustrated in FIG. 3, and a slot structure in a resource pool for data communication is configured as the structure illustrated in FIG. 1.

Therefore, if the target slot is used for transmission of the positioning reference signal (for example, the target slot is selected from the resource pool for the positioning reference signal), the number of first symbols in the target slot is *X*₁*,* and the number of second symbols in the target slot is *Y*₁. More specifically, in the target slot, the first *X*₁ symbols are first symbols, the last *Y*₁ symbols are second symbols, and at least some of symbols between the last first symbol and the 1^{st} second symbol can be used for transmission of the positioning reference signal.

If the target slot is not used for transmission of the positioning reference signal (e. g. for data transmission only), each of the number of first symbols and the number of second symbols is one. More specifically, in the target slot, the 1^{st} symbol is the first symbol, the last symbol is the second symbol, and a symbol(s) between the first symbol and the second symbol can be used for PSCCH transmission and PSSCH transmission.

In a second embodiment of the disclosure, both a slot structure in a resource pool for the positioning reference signal and a slot structure in a resource pool for data communication can be configured as the structure illustrated in FIG. 3.

During implementation, transmission resources for a sidelink are insufficient, and the resource pool for the positioning reference signal at least partially overlaps with the resource pool for data communication. Therefore, both the slot structure in the resource pool for the positioning reference signal and the slot structure in the resource pool for data communication can be configured as the structure illustrated in FIG. 3. By adopting such a scheme, it is possible to ensure that a slot used for transmission of the positioning reference signal can satisfy transmission requirements of the positioning reference signal.

Specifically, if a slot is used for transmission of the positioning reference signal, the number of first symbols is *X*₁*,* and the number of second symbols is *Y*₁. If the slot is not used for transmission of the positioning reference signal, the number of first symbols is also *X*₁*,* and the number of second symbols is also *Y*₁.

Further, if a slot is used for transmission of the positioning reference signal, some of symbols between the last first symbol and the 1^{st} second symbol can be used for PSCCH transmission (i. e. SCI transmission), and the rest of the symbols between the last first symbol and the 1^{st} second symbol can be used for transmission of the positioning reference signal. If the target slot is not used for transmission of the positioning reference signal, the symbol(s) between the last first symbol and the 1^{st} second symbol can be used for PSCCH transmission (i. e. SCI transmission) and PSSCH transmission (i. e. data transmission).

In a specific example, if a frequency-domain resource in the resource pool for the positioning reference signal overlaps (partially overlaps or completely overlaps) with a frequency-domain resource in the resource pool for data communication, the slot structure in the resource pool for data communication can also be configured as the structure illustrated in FIG. 3. If the frequency-domain resource in the resource pool for the positioning reference signal does not overlap with the frequency-domain resource in the resource pool for data communication, the slot structure in the resource pool for data communication can still be configured as the structure illustrated in FIG. 2 (i. e. each of the number of first symbols and the number of second symbols is one). By adopting such a scheme, it is possible to ensure that transmission requirements of the positioning reference signal can be satisfied when the target slot is used for both transmission of the positioning reference signal and data transmission, and on the other and, avoid waste of time-domain resources when performing data transmission only.

Referring to FIG. 4, FIG. 4 is a schematic diagram illustrating another sidelink slot structure according to embodiments of the disclosure. As illustrated in FIG. 4, a single slot can include a third symbol. The third symbol is used for SCI transmission, and the third symbol is followed by at least one first symbol. As illustrated in FIG. 4, multiple consecutive symbols that are subsequent to the last third symbol are first symbols. In other embodiments, there can be only one first symbol that follows the last third symbol. The number of third symbols is not limited in embodiments.

Further, a symbol that precedes the third symbol is one first symbol.

More specifically, a single slot can include *N*₂ symbols, the 1^{st} symbol is a first symbol, the 2^{nd} symbol to the (*M*+1)^{th} symbol are the third symbol(s), the (*M*+2)^{th} symbol to the (*M*+2+*X*₂)^{th} symbol are first symbols, and the (*N*₂*-Y*₂)^{th} symbol to the *N*₂^{th} symbol are second symbols. The number of third symbols is M, *N*₂ is a positive integer and *N*₂ > 1, M, *X*₂, and *Y₂* each can be a positive integer, and *N*₂ > 1*+M+X*₂*+Y*₂*.*

It should be noted that, the value of *N*₁ can be the same as or different from the value of *N*₂. The value of *X*₁ can be the same as or different from the value of *X*₂. The value of *Y*₁ can be the same as or different from the value of *Y*₂.

By adopting the structure illustrated in FIG. 4, the terminal can perform AGC within the time indicated by the 1^{st} symbol, and then transmit SCI within the time indicated by the 2^{nd} symbol to the (*M*+1)^{th} symbol. After reception of the SCI is completed, the terminal can perform AGC again within the time indicated by the (*M*+2)^{th} symbol to the (*M*+2+*X*₂)^{th} symbol. More specifically, the terminal can continue to perform AGC on the basis of the AGC in the 1^{st} symbol.

Further, the (*M*+2+*X*₂+1)^{th} symbol to the (*N*₂-*Y*₂-1)^{th} symbol can be denoted as a second other symbol(s). The second other symbol can be used for one or more of: PSSCH transmission and transmission of the positioning reference signal. That is, data and the positioning reference signal can occupy the same second other symbol for transmission.

In a third embodiment of the disclosure, both a slot structure in a resource pool for the positioning reference signal and a slot structure in a resource pool for data communication can be pre-configured as the structure illustrated in FIG. 4.

As described above, during implementation, transmission resources for a sidelink are insufficient, and the resource pool for the positioning reference signal at least partially overlaps with the resource pool for data communication. Therefore, both the slot structure in the resource pool for the positioning reference signal and the slot structure in the resource pool for data communication are configured as the structure illustrated in FIG. 4. As such, it is possible to ensure that a slot used for transmission of the positioning reference signal can satisfy transmission requirements of the positioning reference signal.

Specifically, if the target slot is used for transmission of the positioning reference signal, the *X*₂ consecutive symbols that are subsequent to the third symbol are first symbols, the last *Y*₂ symbols are second symbols, and a symbol(s) between the last first symbol and the 1^{st} second symbol can be used only for transmission of the positioning reference signal or can be used for both transmission of the positioning reference signal and data transmission. If the target slot is not used for transmission of the positioning reference signal (e. g., used for data transmission only), the *X*₂ consecutive symbols that are subsequent to the third symbol are also first symbols, the last *Y₂* symbols are also second symbols, and the symbol between the last first symbol and the 1^{st} second symbol is used for PSSCH transmission.

In a specific example, if a frequency-domain resource in the resource pool for the positioning reference signal overlaps (partially overlaps or completely overlaps) with a frequency-domain resource in the resource pool for data communication, the slot structure in the resource pool for data communication can also be configured as the structure illustrated in FIG. 4. If the frequency-domain resource in the resource pool for the positioning reference signal does not overlap with the frequency-domain resource in the resource pool for data communication, the slot structure in the resource pool for data communication can still be configured as the structure illustrated in FIG. 2. By adopting such a scheme, it is possible to ensure that transmission requirements of a PRS can be satisfied when the target slot is used for both transmission of the positioning reference signal and data transmission, and on the other and, avoid waste of time-domain resources when performing data transmission only.

In a fourth embodiment of the disclosure, if the target slot is used for transmission of the positioning reference signal, the target slot is structured like the structure illustrated in FIG. 4. If the target slot is not used for transmission of the positioning reference signal, the target slot can be structured like the structure illustrated in FIG. 2.

During implementation, whether the target slot is used for transmission of the positioning reference signal can be indicated by SCI. For example, 1 bit can be configured in the SCI to indicate whether the target slot is used for transmission of the positioning reference signal, and the SCI can be control information that occupies the third symbol for transmission.

In other words, the structure of the target slot can be indicated by SCI. If SCI transmitted in the third symbol is used for both data scheduling and scheduling of the positioning reference signal, or is used only for scheduling of the positioning reference signal, the target slot is structured like the structure illustrated in FIG. 4. That is, one or more first symbols are inserted after the last third symbol, and the number of second symbols is multiple. If the SCI transmitted in the third symbol is used only for data scheduling, the target slot is structured like the structure illustrated in FIG. 2. That is, no first symbol is inserted after the last third symbol, and the number of second symbols is one.

Therefore, if the SCI indicates that the target slot is used for transmission of the positioning reference signal, multiple consecutive symbols that are subsequent to the third symbol are all first symbols, and at least some of symbols that are subsequent to the multiple first symbols are used for transmission of the positioning reference signal. Further, if the SCI indicates that the target slot is not used for transmission of the positioning reference signal, multiple consecutive symbols that are subsequent to the third symbol are used for transmission of data on a sidelink.

More specifically, if the SCI indicates that the target slot is used for transmission of the positioning reference signal, the (*M*+2)^{th} symbol to the (*M*+2+*X*₂)^{th} symbol are first symbols, the (*N*₂-*Y*₂)^{th} symbol to the *N*₂^{th} symbol are second symbols, and at least some of symbols between the last first symbol and the 1^{st} second symbol can be used for transmission of the positioning reference signal. More specifically, the symbol between the last first symbol and the 1^{st} second symbol can be used only for transmission of the positioning reference signal, or can be used for both transmission of the positioning reference signal and data transmission.

Referring to FIG. 1, in a sidelink positioning scenario, after the target slot is determined, the positioning reference signal is transmitted to a Rx terminal in at least some of symbols between the first symbol and the second symbol. More specifically, the positioning reference signal is transmitted in at least some of symbols between the last first symbol and the 1^{st} second symbol.

It should be noted that, a symbol between the *i*^{th} symbol and the *j*^{th} symbol described in embodiments of the disclosure refers to the (*i*+1)^{th} symbol to the (*j*-1)^{th} symbol, and does not include the *i*^{th} symbol and the *j*^{th} symbol, where i and j each are a positive integer.

In other embodiments of the disclosure, the number of first symbols and/or the number of second symbols can be determined according to the positioning reference signal, for example, can be determined according to the bandwidth of the positioning reference signal, where a larger bandwidth corresponds to a larger number of first symbols, or a larger bandwidth corresponds to a larger number of second symbols.

More specifically, whether to insert the first symbol after the last third symbol, as well as the number of first symbols to be inserted, can be determined according to the bandwidth of the positioning reference signal. By adopting such a scheme, the slot structure can be flexibly adapted to transmission requirements of the positioning reference signal.

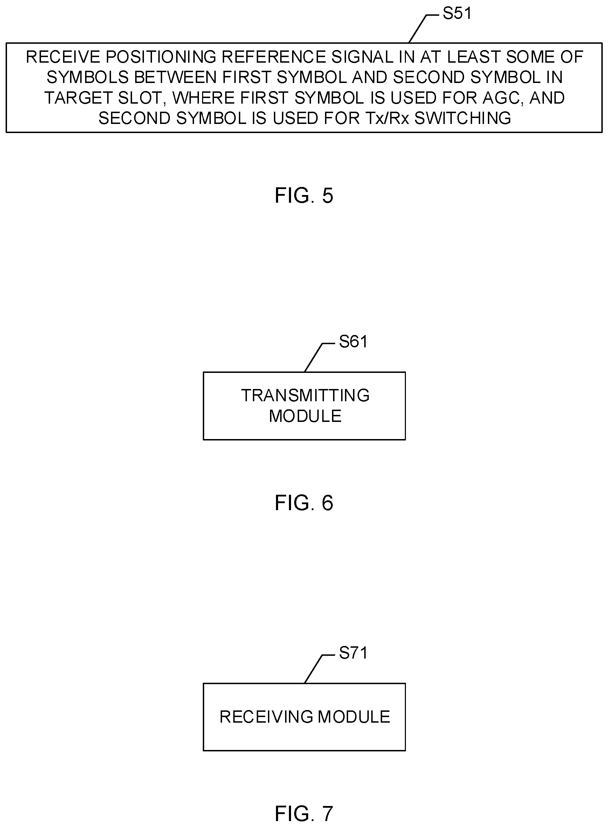

Referring to FIG. 5, FIG. 5 is a method for positioning reference signal reception according to embodiments of the disclosure. The method illustrated in FIG. 5 can be performed by a Rx terminal. The method for reception illustrated in FIG. 5 can include step S51.

Step S51, a positioning reference signal is received in at least some of symbols between a first symbol and a second symbol in a target slot, where the first symbol is used for AGC, and the second symbol is used for Tx/Rx switching.

In the implementation of step S51, before receiving the positioning reference signal, the Rx terminal can firstly receive resource indication information transmitted by a Tx terminal, where the resource indication information can include the target slot. As such, the Rx terminal can determine the target slot. During implementation, the resource indication information can be carried by SCI.

In an embodiment of the disclosure, the structure of the target slot can be pre-configured. If the positioning reference signal is to be transmitted, the slot structure pre-configured can be the structure illustrated in FIG. 3 or the structure illustrated in FIG. 4.

In another embodiment of the disclosure, the structure of the target slot can be determined according to SCI, for example, 1 bit can be configured in the SCI to indicate whether the target slot is used for transmission of the positioning reference signal.

With reference to FIG. 4, the Rx terminal can receive SCI within a time indicated by a third symbol. If the SCI indicates that the target slot is used for transmission of the positioning reference signal, *X*₂ first symbols are inserted after the last third symbol, and the last *Y*₂ symbols are second symbols. That is, if the SCI indicates that the target slot is used for transmission of the positioning reference signal, the slot structure illustrated in FIG. 4 is adopted, and as such, AGC can be performed in multiple consecutive symbols that are subsequent to the third symbol and Tx/Rx switching can be performed in the last multiple symbols.

If the SCI indicates that the target slot is used only for data transmission, the existing slot structure is still adopted, that is, AGC does not need to be performed after the last third symbol, a symbol for Tx/Rx switching is only one symbol, and data carried on a PSSCH is directly received in a symbol after the third symbol.

Further, in a sidelink positioning scenario, the Rx terminal can receive the positioning reference signal between the last first symbol and the 1^{st} second symbol in the target slot.

For more details such as the working principle and the working manner of the method for positioning reference signal reception illustrated in FIG. 5, reference can be made to relevant elaborations of FIG. 1 to FIG. 4, and which are not described again herein.

It can be understood that, during implementation, the method for positioning reference signal transmission and the method for positioning reference signal reception can be implemented by a software program, and the software program is executed by a processor integrated inside a chip or a chip module. The method can also be implemented by a combination of software and hardware, which is not limited in the disclosure.

Referring to FIG. 6, FIG. 6 is an apparatus for positioning reference signal transmission according to embodiments of the disclosure. The apparatus for positioning reference signal transmission illustrated in FIG. 6 can be deployed in a Tx terminal. The apparatus for positioning reference signal transmission illustrated in FIG. 6 can include a transmitting module 61. The transmitting module 61 is configured to transmit a positioning reference signal in at least some of symbols between a first symbol and a second symbol in a target slot, where the first symbol is used for AGC, and the second symbol is used for Tx/Rx switching.

For more details such as the working principle and the working manner of the apparatus for positioning reference signal transmission illustrated in FIG. 6, reference can be made to the foregoing related elabarions, which are not repeatedly described herein.

During implementation, the apparatus for positioning reference signal transmission illustrated in FIG. 6 can correspond to a chip having communication functions in a terminal device such as a system-on-chip (SOC), a baseband chip, etc.; or correspond to a chip module having communication functions in a terminal device; or correspond to a terminal device.

Referring to FIG. 7, FIG. 7 is an apparatus for positioning reference signal reception according to embodiments of the disclosure. The apparatus for positioning reference signal reception illustrated in FIG. 7 can be deployed in a Rx terminal. The apparatus for positioning reference signal reception illustrated in FIG. 7 can include a receiving module 71. The receiving module 71 is configured to receive the positioning reference signal in at least some of symbols between a first symbol and a second symbol in a target slot, where the first symbol is used for AGC, and the second symbol is used for Tx/Rx switching.

For more details such as the working principle and the working manner of the apparatus for positioning reference signal reception illustrated in FIG. 7, reference can be made to the foregoing related elaborations, which are not repeatedly described herein.

During implementation, the apparatus for positioning reference signal reception illustrated in FIG. 7 can correspond to a chip having communication functions in a terminal device such as an SOC, a baseband chip, etc.; or correspond to a chip module having communication functions in a terminal device; or correspond to a terminal device.

During implementation, for each module/unit included in an apparatus or a product described in the embodiments above, each module/unit can be a software module/unit, a hardware module/unit, or can be partially a software module/unit and partially a hardware module/unit.

For example, for each apparatus and product applied to or integrated into a chip, each module/unit included can be implemented by hardware such as circuits, or at least part of modules/units can be implemented by software programs that run on a processor integrated into the chip, and the rest (if any) of modules/units can be implemented by hardware such as circuits. For each apparatus and product applied to or integrated into the chip module, each module/unit included can be implemented by hardware such as circuit, and different module/units can be located in the same component (such as a chip, a circuit module, and the like) or different components of the chip module. Alternatively, at least part of module/units can be implemented by software programs that run on the processor integrated into the chip module, and the rest (if any) of module/units can be implemented by hardware such as circuits. For each apparatus and product applied to or integrated into a terminal, each module/unit included can be implemented by hardware such as circuits, and different module/units can be located in the same component (such as a chip, a circuit module, and the like) or different components in the terminal, or at least part of module/units can be implemented by software programs that run on the processor integrated into the terminal, and the rest (if any) of modules/units can be implemented by hardware such as circuits.

Embodiments of the disclosure further provide a computer-readable storage medium. The computer-readable storage medium is a non-volatile storage medium or a non-transitory storage medium. The computer-readable storage medium is configured to store computer programs which, when executed by a processor, ar eoperable to perform steps of the method provided in embodiments illustrated in FIG. 1 or FIG. 5. Preferably, the computer-readable storage medium can include a computer-readable storage medium such as a non-volatile memory or a non-transitory memory.

Embodiments of the disclosure further provide a terminal. The terminal includes a memory and a processor. The processor is coupled to the memory. The memory can be located inside a communication device, or can be located outside the communication device. The memory and the processor can be connected via a communication bus. The memory stores computer programs executable by the processor. When executing the computer programs, the processor can perform steps in the method for positioning reference signal transmitted provided in FIG. 1, or perform steps in the method for positioning reference signal reception provided in FIG. 5.

It should be understood by those of ordinary skill in the art that, all or some of steps of various methods according to embodiments of the disclosure can be implemented by a program instructing relevant hardware. The program can be stored in a computer-readable storage medium.

It should be understood that, in embodiments of the disclosure, the processor can be a central processing unit (CPU), or can be other general-purpose processors, a digital signal processor (DSP), an application specific integrated circuit (ASIC), a field programmable gate array (FPGA), or other programmable logic devices, discrete gates or transistor logic devices, or discrete hardware components. The general-purpose processor can be a microprocessor, or the processor can be any conventional processor or the like.

It should also be understood that, the memory or storage medium in embodiments of the disclosure can be a volatile memory or a non-volatile memory, or can include both the volatile memory and the non-volatile memory. The non-volatile memory can be a read-only memory (ROM), a programmable ROM (PROM), an erasable PROM (EPROM), an electrically EPROM (EEPROM), or flash memory. The volatile memory can be a random access memory (RAM) that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

All or some of the above embodiments can be implemented through software, hardware, firmware, or any other combination thereof. When implemented by software, all or some the above embodiments can be implemented in the form of a computer program product. The computer program product includes one or more computer instructions or computer programs. When the computer instructions or the computer programs are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one. The integrated unit may be implemented in a form of hardware, or may be implemented in a form of hardware and a software functional unit.

It should be understood that, the network device in embodiments of the disclosure can be an apparatus deployed in a radio access network (RAN) to provide wireless communication functions, such as a base station (BS) (also referred to as a base-station device). The base station can be, for example, a base transceiver station (BTS) and a base station controller (BSC) in a 2^{nd}-generation (2G) network, a node B (NodeB) and a radio network controller (RNC) in a 3^{rd}-generation (3G) network, an evolved node B (eNB) and and an access point (AP) in a wireless local area network (WLAN) in a 4^{th}-generation (4G) network, a next-generation node B (gNB) in 5^{th}-generation (5G) new radio (NR), and a device for providing functions of a base station in a future new communication system, etc.

The terminal in embodiments of the disclosure can refer to various forms of UEs, an access terminal, a subscriber unit, a subscriber station, a mobile station (MS), a remote station, a remote terminal, a mobile device, a user terminal, a terminal device, a wireless communication device, a user agent, or a user apparatus. The terminal can also be a cellular radio telephone, a cordless telephone, a session initiation protocol (SIP) telephone, a wireless local loop (WLL) station, a Personal Digital Assistant (PDA), various devices with wireless communication functions such a handheld device, a computing device, other processing devices coupled with a wireless modem, an in-vehicle device, a wearable device, a terminal in a 5G network, a terminal in a future evolved public land mobile network (PLMN), etc., and embodiments of the disclosure are not limited in this regard.

It should be understood that, the term "and/or" herein only describes an association between associated objects, which means that there can be three relationships. For example, A and/or B can mean A alone, both A and B exist, and B alone. In addition, the character "/" herein generally indicates that the associated objects are in an "or" relationship.

The expression "multiple" in embodiments of the disclosure refers to two or more than two. The expressions such as "first" and "second" in embodiments of the disclosure are only used for illustration and differentiation between the objects described, and does not represent an order, nor does it represent a particular limitation on the number of devices in embodiments of the disclosure, and cannot constitute any limitation on embodiments of the disclosure.

Although the disclosure has been described above, the disclosure is not limited thereto. Any person skilled in the art can make various changes and modifications without departing from the spirit and scope of the disclosure, and therefore, the protection scope of the disclosure shall be subject to the scope defined by the claims.

## Claims

1. A method for positioning reference signal transmission, comprising:
transmitting a positioning reference signal in at least some of symbols between a first symbol and a second symbol in a target slot, wherein the first symbol is used for automatic gain control (AGC), and the second symbol is used for transmission/reception (Tx/Rx) switching.

2. The method of claim 1, wherein in response to the target slot being used for transmission of the positioning reference signal, the number of first symbols is multiple, and/or the number of second symbols is multiple.

3. The method of claim 1 or 2, wherein the number of first symbols and the number of second symbols are pre-configured.

4. The method of claim 1 or 2, wherein
for different carriers, the number of first symbols and/or the number of second symbols is different; or
for different bandwidth parts (BWP), the number of first symbols and/or the number of second symbols is different; or
for different resource pools, the number of first symbols and/or the number of second symbols is different.

5. The method of claim 1, wherein in response to the target slot being not used for transmission of the positioning reference signal, each of the number of first symbols and the number of second symbols is one.

6. The method of claim 1, wherein in response to the target slot being not used for transmission of the positioning reference signal, the number of first symbols is multiple, and/or the number of second symbols is multiple.

7. The method of claim 1 or 2, wherein the target slot is further configured with a third symbol, and the third symbol is used for sidelink control information (SCI) transmission, wherein
at least one symbol that is subsequent to the third symbol is the first symbol, and at least some of symbols between the last first symbol and the second symbol are used for transmission of the positioning reference signal and/or transmission of sidelink data.

8. The method of claim 7, wherein a symbol that precedes the third symbol is one first symbol.

9. The method of claim 1 or 2, wherein the target slot is further configured with a third symbol, and the third symbol is used for SCI transmission, wherein
in response to the SCI indicating that the target slot is used for transmission of the positioning reference signal, a plurality of consecutive symbols that are subsequent to the third symbol are all first symbols, and at least some of symbols that are subsequent to the plurality of first symbols are used for transmission of the positioning reference signal.

10. The method of claim 9, wherein in response to the SCI indicating that the target slot is not used for transmission of the positioning reference signal, a plurality of consecutive symbols that are subsequent to the third symbol are used for transmission of sidelink data.

11. A method for positioning reference signal reception, comprising:
receiving a positioning reference signal in at least some of symbols between a first symbol and a second symbol in a target slot, wherein the first symbol is used for automatic gain control (AGC), and the second symbol is used for transmission/reception (Tx/Rx) switching.

12. The method of claim 11, wherein in response to the target slot being used for reception of the positioning reference signal, the number of first symbols is multiple, and/or the number of second symbols is multiple.

13. The method for of claim 11 or 12, wherein the number of first symbols and the number of second symbols are pre-configured.

14. The method of claim 11 or 12, wherein
for different carriers, the number of first symbols and/or the number of second symbols is different; or
for different bandwidth parts (BWP), the number of first symbols and/or the number of second symbols is different; or
for different resource pools, the number of first symbols and/or the number of second symbols is different.

15. The method of claim 11, wherein in response to the target slot being not used for reception of the positioning reference signal, each of the number of first symbols and the number of second symbols is one.

16. The method of claim 11, wherein in response to the target slot being not used for reception of the positioning reference signal, the number of first symbols is multiple, and/or the number of second symbols is multiple.

17. The method of claim 11 or 12, wherein the target slot is further configured with a third symbol, and the third symbol is used for sidelink control information (SCI) reception, wherein
at least one symbol that is subsequent to the third symbol is the first symbol, and at least some of symbols between the last first symbol and the second symbol are used for reception of the positioning reference signal and/or reception of sidelink data.

18. The method of claim 17, wherein a symbol that precedes the third symbol is one first symbol.

19. The method of claim 11 or 12, wherein the target slot is further configured with a third symbol, and the third symbol is used for SCI reception, wherein
in response to the SCI indicating that the target slot is used for transmission of the positioning reference signal, a plurality of consecutive symbols that are subsequent to the third symbol are all first symbols, and at least some of symbols that are subsequent to the plurality of first symbols are used for transmission of the positioning-related reference information.

20. The method of claim 19, wherein in response to the SCI indicating that the target slot is not used for reception of the positioning reference signal, a plurality of consecutive symbols that are subsequent to the third symbol are used for reception of sidelink data.

21. An apparatus for positioning reference signal transmission, comprising:
a transmitting module configured to transmit a positioning reference signal in at least some of symbols between a first symbol and a second symbol in a target slot, wherein the first symbol is used for automatic gain control (AGC), and the second symbol is used for transmission/reception (Tx/Rx) switching.

22. An apparatus for positioning reference signal reception, comprising:
a receiving module configured to receive a positioning reference signal in at least some of symbols between a first symbol and a second symbol in a target slot, wherein the first symbol is used for automatic gain control (AGC), and the second symbol is used for transmission/reception (Tx/Rx) switching.

23. A computer-readable storage medium configured to store computer programs which, when executed by a processor, are operable to perform the method of any of claims 1 to 10 or the method of any of claims 11 to 20.

24. A terminal, comprising a memory and a processor, wherein the memory is configured to store computer programs executable by the processor, and the processor is configured to execute the computer programs to perform steps of the method of any of claims 1 to 10 or the method of any of claims 11 to 20.
